# EUROPÄISCHE PATENTSCHRIFT

(11) **EP 3 108 540 B1**
(45) Veröffentlichungstag und Bekanntmachung des Hinweises auf die Patenterteilung: **14.03.2018**
(21) Anmeldenummer: 15705934.6
(22) Anmeldetag: 09.02.2015
(51) Int. Cl.: H01Q 3/24, H01Q 25/00, G06K 19/07, H01Q 1/24, H01Q 1/22

(54) **ANTENNENVORRICHTUNG UND VERFAHREN ZUM BETRIEB DERSELBEN**
ANTENNENVORRICHTUNG UND VERFAHREN ZUM BETRIEB DERSELBEN
DISPOSITIF D'ANTENNE ET PROCÉDÉ POUR LE FAIRE FONCTIONNER

(30) Priorität: 17.02.2014 DE 102014202865
(43) Veröffentlichungstag der Anmeldung: 28.12.2016
(73) Patentinhaber: Fraunhofer-Gesellschaft zur Förderung der angewandten Forschung e.V., 80686 München (DE)
(72) Erfinder: STRAUSS, Wolfram, 90429 Nürnberg (DE); MAYORDOMO, Iker, 91058 Erlangen (DE); WEISGERBER, Lars, 02727 Ebersbach-Neugersdorf (DE)
(74) Vertreter: Zinkler, Franz
(86) Internationale Anmeldenummer: PCT/EP2015/052657
(87) Internationale Veröffentlichungsnummer: WO 2015/121204

(56) Entgegenhaltungen:
- WO-A2-2008/016527
- KR-A- 20040 053 931
- US-A1- 2011 109 169

## Beschreibung

Die Erfindung bezieht sich auf eine Antennenvorrichtung, beispielsweise in einer Funkerkennungsumgebung (engl. Radio Frequency Identification - RFID), auf ein Verfahren zum Betrieb der Antennenvorrichtung und auf ein Funkerkennungssystem. Es sind beispielsweise Antennenvorrichtungen aus KR 2004 0053931 A und WO 2008/016527 A2 bekannt.

Passive Funkerkennungstechnologie (engl. Radio Frequency Identification - RFID) ist aus Objekterkennungsanwendungen, wie beispielsweise der Logistik, hinreichend bekannt. Im Grunde sendet ein Funkerkennungs-Transponder (RFID-Tag) seine Identifikationsnummer, die in seinem Speicher enthalten ist, zurück, wenn das RFID-Tag mittels eines RFID-Lesegeräts abgefragt wird. Passive RFID-Tags müssen keine interne Leistungsversorgung aufweisen, da sie die gesamte benötigte Leistung von dem elektromagnetischen Feld erhalten können, welches das Lesegerät aussendet.

Eine typische Anwendung umfasst ein Tor (RFID-Gate) mit einem RFID-Lesegerät und einer oder mehreren Antennen. Mit einem Etikett (Tag) versehene Objekte (z.B. in Form von Paletten) durchlaufen das Gate und ihre jeweiligen IDs werden durch das Lesegerät ausgelesen. In dieser Situation besteht ein typisches Problem darin, dass bei vielen Transpondern nicht alle Objekte identifiziert werden (das heißt, die Erkennungsrate liegt unter 100%). Derzeitige Lesegeräte erkennen unter optimalen Bedingungen beispielsweise nur etwa 80% - 98 % der auf einer Palette angeordneten RFID-Tags. Auch eine Rate von 98 % ist in bestimmten Anwendungen nicht ausreichend.

Um die Erkennungsrate des Systems zu erhöhen, können spezielle Techniken, wie beispielsweise Antennenstrahlformung (Beam Forming) verwendet werden. Diese Methode erfordert, dass die Antennencharakteristik anhand einer Elektronik (z.B. einem Mikrocontroller, Hochfrequenzschaltern, usw.) gesteuert werden, wodurch die Antennen "aktiv" werden.

Normalerweise liefern RFID-Lesegeräte keinen Netzanschluss für diese Art von Antennen, weshalb die Leistung extern, d.h., mittels einer Spannungsversorgung oder einer Batterie, bereitgestellt werden muss. Die Tatsache, dass diese "intelligenten" Antennen eine externe Leistungsversorgung oder eine Batterie benötigen, kann für potentielle Kunden und Nutzer ein Ablehnungsgrund sein, da beispielsweise die Lesegeräte kostenverursachend modifiziert oder neu angeschafft werden müssen oder ein ebenfalls kostenverursachender Wartungsaufwand (beispielsweise Batteriewechsel) entstehen kann.

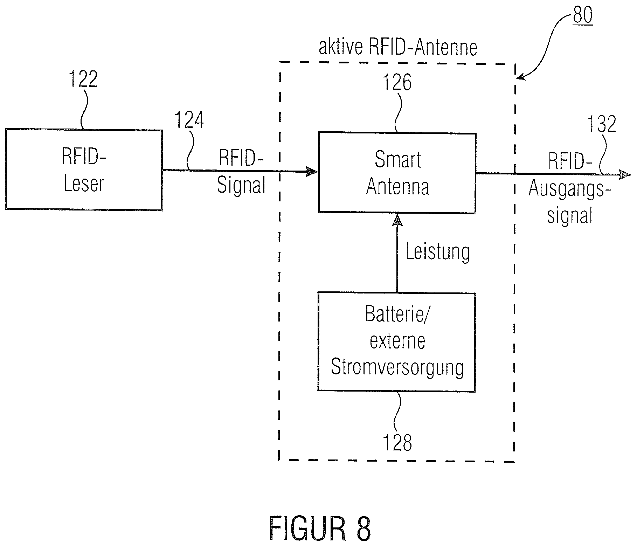

Fig. 8 zeigt eine schematisches Blockschaltbild eines RFID-Lesegeräts mit einer aktiven Funkerkennungs-Antenne 80 gemäß dem Stand der Technik. Die aktive RFID-Antenne 80 ist mit einem RFID-Leser 122 verbunden und ausgebildet, um ein zu sendendes RFID-Signal 124 von dem RFID-Lesegerät 122 zu empfangen. Die aktive Antenne 80 weist eine gesteuerte (intelligente) Antennenstruktur 126 (engl. Smart Antenna) auf, die mittels einer Batterie oder einer externen Stromversorgung 128 mit Leistung versorgt wird. Die aktive RFID-Antenne 80 ist ausgebildet, um das RFID-Ausgangssignal, das heißt das Funksignal 132, auszusenden.

Die Aufgabe der vorliegenden Erfindung besteht deshalb darin, eine aktive Antennenvorrichtung und ein Verfahren zum Betrieb derselben zu schaffen, die einen Betrieb unabhängig von einer externen Energieversorgung mit einem reduziertem Wartungsaufwand ermöglicht.

Diese Aufgabe wird durch den Gegenstand der unabhängigen Patentansprüche gelöst.

Der Kerngedanke der vorliegenden Erfindung besteht deshalb darin, dass die Energie zum Betrieb von aktiven Komponenten einer aktiven Antennenvorrichtung einem zu sendenden Signal entnommen wird. Das zu sendende Signal wird der aktiven Antennenvorrichtung an einem Anschluss bereitgestellt. Aus dem zu sendenden Signal wird ein Signalanteil ausgekoppelt, so dass eine aus dem ausgekoppelten Signalanteil gewonnene Energie einen Betrieb der aktiven Komponenten unabhängig von einem externen Netzanschluss oder einer Batterie ermöglicht. Dies ermöglicht einen Entfall von Batteriewechseln und eine Verlängerung von Wartungszyklen der aktiven Antennenvorrichtung.

Ausführungsbeispiele der vorliegenden Erfindung schaffen eine aktive Antennenvorrichtung mit einem Anschluss zum Empfangen eines zu sendenden Signals und einer Antenne zum Erzeugen eines Funksignals basierend auf dem zu sendenden Signal. Die aktive Antennenvorrichtung weist eine Steuerung auf, die konfiguriert ist, um die Antenne abhängig von Eigenschaften des Funksignals zu steuern. Die aktive Antennenvorrichtung weist ferner einen Koppler zwischen dem Anschluss und der Antenne auf, der ausgebildet ist, um einen Signalanteil aus dem zu sendenden Signal auszukoppeln. Die aktive Antennenvorrichtung weist ferner einen Energiekonverter auf, der zwischen den Koppler und die Steuerung geschaltet ist und der ausgebildet ist, um ein Leistungssignal für den Betrieb der Steuerung basierend auf dem ausgekoppelten Signalanteil bereitzustellen.

Vorteilhaft an diesem Ausführungsbeispiel ist, dass das Leistungssignal energieeffizient aus dem zu sendenden Signal auskoppelbar ist, so dass eine durch das Auskoppeln verursachte Signaldämpfung des zu sendenden Signals vernachlässigbar oder kompensierbar ist und so dass das Leistungssignal einen energieautarken Betrieb der Steuerung ermöglicht. Insbesondere in Umgebungen, in denen ein Trägersignal (etwa ein RFID-Trägersignal) über große Zeiträume oder kontinuierlich durch eine Signalquelle bereitgestellt wird, kann so ein Dauerbetrieb der aktiven Antennenvorrichtung ermöglicht werden.

Weitere Ausführungsbeispiele der vorliegenden Erfindung schaffen eine aktive Antennenvorrichtung, bei der die Steuerung ausgebildet ist, um die Antenne so anzusteuern, dass das Funksignal ein oder mehrere Strahlungskeulen aufweist, die in ihrer Amplitude und in ihrem Abstrahlwinkel voneinander verschieden sind. Dies kann mittels eines Antennenfeldes mit mehreren Antennenelementen erfolgen.

Vorteilhaft an diesem Ausführungsbeispiel ist, dass Strahlungskeulen des Funksignals variiert werden können, um eine erhöhte Anzahl von Transpondern zu erreichen. Ferner wird eine Energie für den Betrieb von Steuerelementen des Antennenfeldes und der Steuerung aus dem zu sendenden Signal ausgekoppelt.

Weitere Ausführungsbeispiele schaffen eine aktive Antennenvorrichtung, die mittels eines Befestigungselements mit einer Signalquelle, die das zu sendende Signal bereitstellt, verbindbar ist. Das Befestigungselement ist beispielsweise an der aktiven Antennenvorrichtung oder an der Signalquelle angeordnet.

Vorteilhaft an diesem Ausführungsbeispiel ist, dass handelsüblich erhältliche oder bereits im Einsatz befindliche Signalquellen mit der aktiven Antennenvorrichtung gekoppelt werden können.

Weitere Ausführungsbeispiele der vorliegenden Erfindung schaffen eine aktive Antennenvorrichtung mit einer Empfangsantenne, die ausgebildet ist, um ein Empfangssignal zu empfangen, und um das Empfangssignal an einem Empfangsanschluss auszugeben, etwa der Signalquelle.
Vorteilhaft an diesem Ausführungsbeispiel ist, dass mittels einer Empfangsantenne Empfangssignale auch während eines Sendebetriebs der aktiven Antennenvorrichtung empfangen werden können und das Empfangssignal von einer Einfügedämpfung des Kopplers unbeeinflusst ist.

Weitere Ausführungsbeispiele der vorliegenden Erfindung schaffen eine aktive Antennenvorrichtung, die einen Energiespeicher, etwa einen Kondensator oder einen Akkumulator, zwischen dem Energiekonverter und der Antenne aufweist. Der Energiespeicher ist ausgebildet, um mittels des Leistungssignals geladen zu werden, und um das Leistungssignal der Antenne bereitzustellen.

Vorteilhaft an diesem Ausführungsbeispiel ist, dass der Energiespeicher als Puffer verwendbar ist und beispielsweise in Zeitintervallen, in welchen die Steuerung einen geringen Energiebedarf aufweist, aufladbar ist und in Zeitintervallen, in denen die Steuerung einen erhöhten Energiebedarf aufweist, der gegebenenfalls über einen Energiegehalt des Leistungssignals hinausgeht, zusätzliche elektrische Leistung bereitstellen kann, um einen Betrieb der Steuerung in den Zeitintervallen mit dem erhöhten Leistungsbedarf zu ermöglichen.

Weitere Ausführungsbeispiele der vorliegenden Erfindung schaffen Funkerkennungs-Systeme mit einem Funkerkennungs-Lesegerät und zumindest einer aktiven Antennenvorrichtung.

Vorteilhaft an diesen Ausführungsbeispielen ist, dass ein Funkerkennungs-Lesegerät mit mehreren Antennenvorrichtungen gekoppelt sein kann, etwa über eine Drahtlosverbindung, so dass ein großer Bereich mittels eines Funkerkennungs-Lesegeräts auf eine Anwesenheit von Funkerkennungs-Transpondern (RFID-Tags) überwachbar ist.

Weitere Ausführungsbeispiele der vorliegenden Erfindung schaffen ein Funkerkennungs-system mit aktiven Antennenvorrichtungen und Verfahren zum Betrieb einer aktiven Antennenvorrichtung.

Weitere vorteilhafte Ausführungsbeispiele sind der Gegenstand der abhängigen Patentansprüche.

Bevorzuge Ausführungsbeispiele der vorliegenden Erfindung werden nachfolgend Bezug nehmend auf die beiliegenden Zeichnungen erläutert. Es zeigen:
- Fig. 1: ein schematisches Blockschaltbild einer aktiven Antennenvorrichtung gemäß einem Ausführungsbeispiel der vorliegenden Erfindung, die mit einer Signalquelle verbunden ist;
- Fig. 2: ein schematisches Blockschaltbild einer aktiven Antennenvorrichtung gemäß einem weiteren Ausführungsbeispiel der vorliegenden Erfindung, mittels eines Befestigungselements mit einem Anschluss eines RFID-Lesers verbunden ist und einen Energiespeicher aufweist;
- Fig. 3: ein schematisches Blockschaltbild einer aktiven Antennenvorrichtung gemäß einem weiteren Ausführungsbeispiel der vorliegenden Erfindung, die eine Sendeantenne und eine Empfangsantenne aufweist;
- Fig. 4: ein schematisches Blockschaltbild eines Funkerkennungs-Systems mit einem Funkerkennungs-Lesegerät und drei aktiven Antennenvorrichtungen gemäß einem Ausführungsbeispiel der vorliegenden Erfindung;
- Fig. 5: eine schematisches Blockschaltbild einer intelligenten Antenne;
- Fig. 6: eine Tabelle, in der beispielhaft Koppelfaktoren und Einfügedämpfungen eines HF-Koppler, verbleibende Leistungen des zu sendenden Signals und Leistungen eines jeweiligen Leistungssignals, das von HF-Konvertern bereitgestellt werden kann, gegenübergestellt sind;
- Fig. 7: ein schematisches Flussdiagramm eines Verfahrens zum Betrieb einer aktiven Antennenvorrichtung gemäß einem Ausführungsbeispiel der vorliegenden Erfindung; und
- Fig.8: eine schematisches Blockschaltbild eines RFID-Lesegeräts mit einer aktiven Funkerkennungs-Antenne gemäß dem Stand der Technik.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

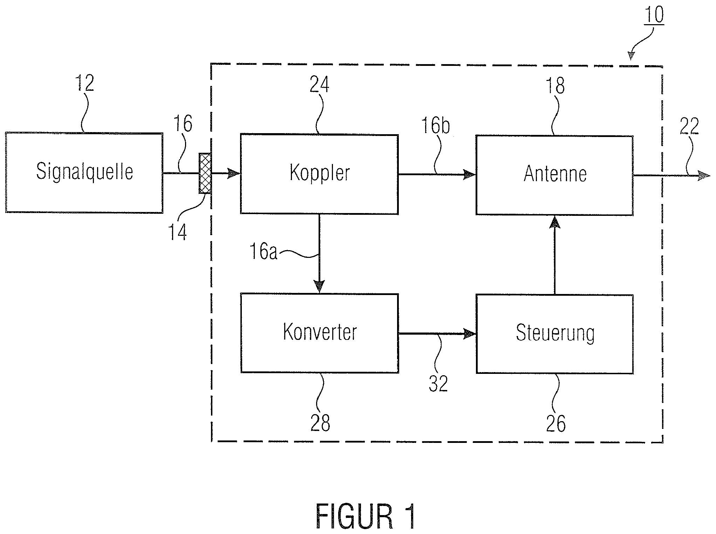

Fig. 1 zeigt ein schematisches Blockschaltbild einer aktiven Antennenvorrichtung 10, die mit einer Signalquelle 12 verbunden ist. Die aktive Antennenvorrichtung 10 weist einen Anschluss 14 auf, der ausgebildet ist, um an diesem ein von der Signalquelle 12 bereitgestelltes, zu sendendes Signal 16 zu empfangen. Bei dem Anschluss 14 kann es sich um eine Koaxial-, oder eine sonstige drahtgebundene Verbindung handeln.

Die aktive Antennenvorrichtung 10 weist ferner eine Antenne 18 auf, die ausgebildet ist, um ein Funksignal 22 basierend auf dem zu sendenden Signal 16 zu erzeugen. Die Antenne 18 kann eine omnidirektionale und/oder eine richtungsabhängige Strahlungscharakteristik aufweisen, so dass das Funksignal 22 omnidirektional und/oder richtungsabhängig von der Antenne 18 abgestrahlt werden kann. Die Strahlungscharakteristik kann zeitlich konstant oder veränderlich sein. Die Antenne 18 weist beispielsweise eine Richtungscharakteristik mit zumindest einer Vorzugsrichtung, einer Strahlungskeule, auf.

Die aktive Antennenvorrichtung 10 umfasst einen Koppler 24, der zwischen dem Anschluss 14 und der Antenne 18 angeordnet ist. Der Koppler 24 ist ausgebildet, um das zu sendende Signal 16 zu empfangen, und um einen Signalanteil 16a aus dem zu sendenden Signal 16 auszukoppeln. Der Koppler 24 ist ausgebildet, um der Antenne 18 einen verbleibenden Signalanteil 16b des zu sendenden Signals 16 bereitzustellen. Der Koppler 24 kann ausgebildet sein, um das zu sendende Signal 16 hochohmig abzugreifen und beispielsweise 10% oder einen anderen Anteil der Energie des zu sendenden Signals 16 auskoppeln. Alternativ kann der Koppler 24 ausgebildet sein, um den Signalanteil 16a basierend auf einem Streifenleiter- und/oder einem Hohlleiterprinzip auszukoppeln.

Die aktive Antennenvorrichtung 10 weist eine Steuerung 26 auf, die ausgebildet ist, um die Antenne 18 bzw. Eigenschaften der Antenne 18 abhängig von gewünschten oder angestrebten Eigenschaften des Funksignals 22 zu steuern. Bei den Eigenschaften der Antenne 18 kann es sich um eine Abstrahlcharakteristik der Antenne 18 handeln, die basierend auf einer gewünschten oder angestrebten Richtungscharakteristik des Funksignals 22 gesteuert wird. Bei den Eigenschaften des Funksignals 22 kann es sich um eine Phase und/oder Polarisierung und/oder, eine Frequenz, einen Modulationsgrad, eine Modulationsform des Funksignals 22 handeln. Die Abstrahlcharakteristik der Antenne 18 kann eine oder mehrere Strahlungskeulen, das heißt bevorzugte Abstrahlrichtungen, aufweisen. Bei der Polarisierung kann es sich um eine lineare, bspw. horizontale oder vertikale, oder zirkulare Polarisierung handeln.

Die aktive Antennenvorrichtung 10 weist einen Energiekonverter 28 auf, der zwischen den Koppler 24 und die Steuerung 26 geschaltet ist und ausgebildet ist, um ein Leistungssignal 32 für den Betrieb der Steuerung 26 basierend auf dem ausgekoppelten Signalanteil 16a bereitzustellen.

Weist das zu sendende Signal 16 eine Frequenz auf, so kann der ausgekoppelte Signalanteil 16a ebenfalls diese Frequenz aufweisen. Der Energiekonverter 28 kann ausgebildet sein, um eine Frequenz und/oder eine Signalform des ausgekoppelten Signalanteils 16a zu verändern, und/oder um das Leistungssignal 32 mit einer von der Frequenz des ausgekoppelten Signalanteils 16a verschiedenen Frequenz und/oder einer geänderten Signalform bereitzustellen. Das Leistungssignal 32 kann ein Gleichstromsignal (Gleichstrom = Direct Current - DC) oder ein Wechselstromsignal, etwa mit 50 Hz oder 60 Hz (Wechselstrom = Alternating Current - AC) sein. Alternativ oder zusätzlich kann der Energiekonverter 28 ausgebildet sein, um den Signalanteil 16a so umzuformen, dass das Leistungssignal 32 eine Rechteckform aufweist (engl. rectification). Alternativ kann das Leistungssignal auch eine andere Signalform aufweisen, wie etwa ein Sägezahnmuster. In anderen Worten kann der Energiekonverter 28 ein AC/AC-Konverter oder ein AC/DC-Konverter sein.

Die aktive Antennenvorrichtung 10 kann mit existierenden Signalquellen, beispielsweise RFID-Lesegeräten, verbunden werden. Ein Betrieb der aktiven Komponente (Steuerung 26) kann mithin basierend auf dem Leistungssignal und somit basierend auf dem zu sendenden Signal 16 unabhängig von einer äußeren Energieversorgung wie einem Netzanschluss oder einer Batterie erfolgen.

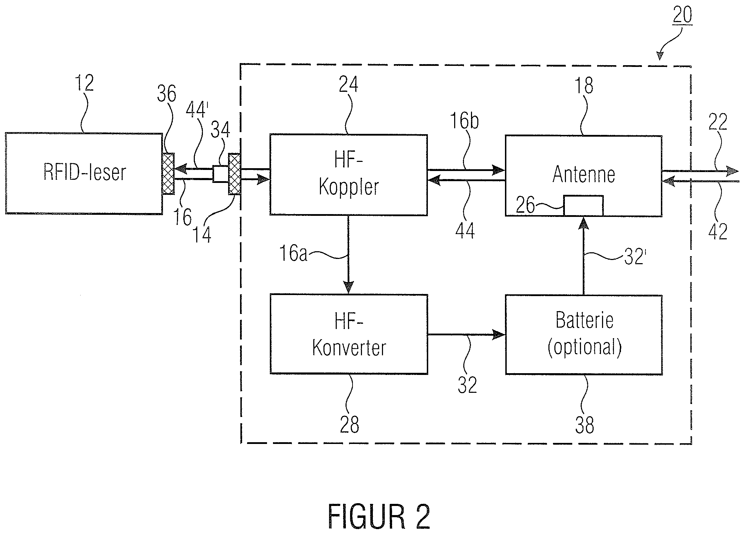

Fig. 2 zeigt ein schematisches Blockschaltbild einer aktiven Antennenvorrichtung 20, gemäß einem weiteren Ausführungsbeispiel der vorliegenden Erfindung, die ausgebildet ist, um RFID-Signale zu senden und die im RFID-Bereich einsetzbar ist.

Die aktive Antennenvorrichtung 20 ist an einem Anschluss 14 mittels eines Befestigungselements 34 mit einem Anschluss 36 des RFID-Lesers 12 (Signalquelle) eines RFID-Systems verbunden. Der RFID-Leser 12 kann gleich oder ähnlich ausgebildet sein, wie der RFID-Leser 122 in Fig. 8. Das zu sendende Signal 16 ist ein RFID-Signal. Das Befestigungselement 34 kann mit dem Anschluss 14 verbunden sein. Alternativ kann das Befestigungselement 34 mit dem RFID-Leser 12, und/oder dessen Anschluss 36 verbunden sein. Alternativ oder zusätzlich kann das Befestigungselement 34 oder ein Verbindungselement zwischen dem Anschluss 14 der aktiven Antennenvorrichtung 20 und dem Anschluss 36 des RFID-Lesers 12 angeordnet sein.

RFID-Signale können Frequenzen von mehreren Kilohertz bis hin zu mehreren Megahertz oder gar Gigahertz aufweisen. Der Koppler 24 ist basierend auf den hohen Frequenzen des Sendesignals 16 ein Hochfrequenz(HF)-Koppler. Bei dem HF-Koppler 24 kann es sich um das Modell BDCN-20-13+ der Firma Mini-Circuits® handeln. Bei dem Konverter 28 handelt es sich basierend auf den hohen Frequenzen des ausgekoppelten Signalanteils 16a um einen HF-Konverter. Bei dem HF-Konverter 28 kann es sich um das Modell PCC110 der Firma Power Cast® handeln. Das Leistungssignal 32 kann ein Gleichstromsignal sein.

Die aktive Antennenvorrichtung 20 weist eine optionale (Puffer-)Batterie 38 zwischen dem HF-Konverter 28 und der Antenne 18 auf, die ausgebildet ist, um das Leistungssignal 32 zu empfangen, so dass die Batterie 38 mittels des Leistungssignals 32 ladbar ist.

Die Antenne 18 weist die Steuerung 26 auf. Dies kann auch als intelligente Antenne (engl. Smart Antenna) bezeichnet werden.

Ein Leistungsverbrauch von aktiven Komponenten, etwa einer Elektronik oder einer Recheneinheit der Steuerung 26 kann zeitlich veränderlich sein. So kann die Steuerung 26 beispielsweise einen Mikrocontroller aufweisen. Mikrocontroller können einen Schlafmodus (engl. Sleep Mode) und einen Aktivmodus (engl. Active Mode) aufweisen und zwischen den Betriebsmodi wechseln. Ein Leistungsbedarf ist im Schlafmodus geringer als im Aktivmodus. Ein mittlerer Leistungsbedarf ist eine Leistung, den die Steuerung 26 im Mittel innerhalb eines Zeitintervalls benötigt. Das Zeitintervall kann bspw. 1 Minute, eine Stunde oder einen Tag betragen. Mittels der Batterie 38 ist eine Energie des Gleichstromsignals 32 speicherbar, so dass die Leistungsversorgung der Steuerung 26 stabilisiert ist. Auf diese Weise kann elektrische Energie gespeichert werden, wenn der Leistungsverbrauch der Steuerung 26 geringer ist als der mittlere Leistungsbedarf (das heißt unter einem Mittelwert des Leistungsbedarfs) oder geringer ist, als eine elektrische Leistung des Leistungssignals 32, so dass die gespeicherte Energie genutzt werden kann, wenn der Leistungsverbrauch der Steuerung 26 oder weiterer aktiver Komponenten höher ist als der mittlere Leistungsbedarf (das heißt über den Mittelwert des Leistungsbedarfs ansteigt).

Ein Maß des Anteils, der aus dem zu sendenden Signal 16 in Form des ausgekoppelten Signalanteils 16a ausgekoppelt wird, kann somit basierend auf einem mittleren Leistungsbedarf der Steuerung 26, einem Wirkungsgrad der Batterie 38, einem Wirkungsgrad des HF-Konverters 28 und gegebenenfalls einem Wirkungsgrad des HF-Kopplers 24 basieren.

Die Batterie 38 ist ausgebildet, um die Antenne 18 mit einem Leistungssignal 32', das auf dem Leistungssignal 32 basiert, zu versorgen. Das bedeutet, dass die Batterie 38 beispielsweise in Zeitintervallen, in denen die Steuerung 26 der Antenne 18 einen Leistungsbedarf aufweist, der geringer ist als eine Leistung des Leistungssignals 32, geladen wird. In Zeitintervallen, in denen ein Leistungsbedarf der Steuerung 26 höher ist als eine Leistung des Leistungssignals 32, wird die Batterie 38 entladen. In anderen Worten kann das Leistungssignal 32' eine geringere oder höhere Leistung als das Leistungssignal 32 aufweisen und die Batterie 38 ein Leistungspuffer sein.

Eine Leistung des ausgekoppelten Signalanteils 16a, das bedeutet ein Maß, um welches der Anteil 16b gegenüber dem zu sendenden Signal 16 reduziert (gedämpft) ist, kann mittels einer Erhöhung einer Signalleistung des zu sendenden Signals 16 durch die Signalquelle bspw. den RFID-Leser 12 kompensiert werden. Alternativ oder zusätzlich kann ein Antennenelement oder eine Antennenstruktur der Antenne 18 einen gegenüber passiven oder herkömmlichen Antennen vergrößerten Antennengewinn (engl. Antenna Gain) aufweisen. Das bedeutet, dass eine mittels der Auskopplung des Signalanteils 16a reduzierte Leistung des zu sendenden Signals 16 durch eine erhöhte Signalleistung in der Signalquelle 12 und/oder einen erhöhten Antennengewinn in der Antenne 18 kompensierbar ist.

Eine Ausgangsleistung von RFID-Lesegeräten kann basierend auf Standards regional begrenzt sein. Beispielsweise ist derzeit in Europa eine Ausgangsleistung der RFID-Lesegeräte auf 2 W_{ERP} (ERP = Effective Radiated Power - effektive Strahlenleistung) begrenzt, was äquivalent zu 35,15 dBi ist. Antennengewinne können beispielsweise Werte von ca. 7 dBi aufweisen, was zu einer typischen Ausgangsleistung von RFID-Lesegeräten in einem Bereich von etwa 28 dBm führen kann, was einem Wert von ca. 630 mW entspricht.

In andern Worten wird ein kleiner Teil der Sendeleistung in dem zu sendenden Signal 16 von dem Signalzweig in dem HF-Koppler 24 abgezweigt, um die aktiven Schaltungen der Antenne 18 mit Leistung zu versorgen. Der Anteil dieses Signals 16a kann so niedrig gehalten werden, dass die Leistungsfähigkeit des RFID-Systems unbeeinträchtigt oder nahezu unbeeinträchtigt bleibt. Dies kann gewährleistet werden, wenn in dem Lesegerät 12 eine Leistungsreserve vorhanden ist. Bei den meisten handelsüblichen Lesegeräten beträgt diese Reserve etwa 2 dB. Diese kann nutzbar sein, um eine Leistung des zu sendenden Signals 16 zu erhöhen, und um eine Begrenzung der Ausgangsleistung (etwa 2 W_{ERP}) einzuhalten. Auch wenn bei dem Lesegerät keine Reserve vorhanden ist, kann ein Anstieg des Antennengewinns dazu verwendet werden, die notwendige Leistung bereitzustellen.

Eine Kopplungsvorrichtung (Koppler) 24 verwendet an einem Ausgang des RFID-Lesegeräts 12 einen Teil des zu sendenden Signals 16 für die Leistungsversorgung der Antenne 18 bzw. deren Steuerung 26. Mögliche oder typische Kopplungsfaktoren betragen beispielsweise 10 dB, 20 dB oder 30 dB, das heißt, dass 10% (Signalanteil 16a:16b entspricht 1:9), 1% (Signalanteil 16a:16b entspricht 1:99) oder 0,1% (Signalanteil 16a:16b entspricht 1:999) der Signalleistung ausgekoppelt werden. Das restliche Signal gelangt mit geringen Verlusten durch das Kopplungselement 24 und erreicht die Antenne 18, um dort in ein Funksignal überführt und gesendet zu werden. Der für die Leistungsversorgung verwendete Signalanteil 16a kann mittels des HF-Konverters 28 nach der Auskopplung von Hochfrequenz (HF) auf Gleichstrom (GS) abwärts konvertiert werden. Zu diesem Zweck kann ein HF/GS-Wandler 28 verwendet werden.

Ein Wirkungsgrad bzw. eine Effizienz dieser Wandler (Konverter) kann von einer Eingangsleistung, das heißt einer Leistung des ausgekoppelten Signalanteils 16a, abhängen und beispielsweise in einem Bereich zwischen 30% und 60%, 35% und 55% oder 37% und 45% liegen.

Die Antenne 18 ist ausgebildet, um ein Empfangssignal 42 zu empfangen, und um das Empfangssignal 42 in drahtgebundender Form 44 bereitzustellen. Die aktive Antennenvorrichtung 20 ist ausgebildet, um das Empfangssignal in drahtgebundender Form 44 über den HF-Koppler 24 an dem Ausgang 14 als durch den HF-Koppler 24 gedämpftes Empfangssignal 44' bereitzustellen. Antennenvorrichtungen, die ausgebildet sind, um eine Antenne für ein Senden und ein Empfangen eines Funksignals 22 bzw. 42 zu nutzen, können als monostatisch bezeichnet werden. In diesem Fall, kann eine eingefügte Einfügedämpfung, etwa durch den HF-Koppler 24, sowohl das zu sendende Signal 16, als auch das Empfangssignal 42 dämpfen. Der Anschluss 36 kann als Senderanschluss und Empfängeranschluss bezeichnet werden. Alternativ kann der RFID-Leser 12 auch einen weiteren (Empfänger-) Anschluss aufweisen, der ausgebildet ist, um das Empfangssignal 42' zu empfangen.

Auf der Vorwärtsstrecke (Forward Link), das heißt von der Signalquelle 12 ausgehend in Richtung der Antenne 18, kann der Einfluss des HF-Kopplers 24 nahezu vernachlässigbar sein, da der Einfluss durch Erhöhung der Ausgangsleistung des Lesegeräts, das heißt der Signalquelle 12, oder mit einem höheren Antennengewinn der Antenne 18 kompensierbar ist. Eine verringerte Leistungsfähigkeit des RFID-Systems bei monostatischen Szenarios, das heißt eine Antenne für ein Empfangen und Senden des Signals, kann von Einfügungsverlusten durch Einfügedämpfungen (engl. insertion loss) in der Empfängerrichtung, das heißt von der Antenne 18 über den HF-Koppler 24 in Richtung der Signalquelle 12 verringert werden. Die Verringerung kann über einen zusätzlichen Antennengewinn kompensiert werden. Ein zusätzlicher Antennengewinn kann ein Signal-zu-Rausch-Verhältnis am Empfängereingang der Signalquelle erhöhen. Folglich kann ein Ziel einer Systemauslegung einer aktiven Antennenvorrichtung, wie etwa der aktiven Antenne 10 oder 20 darin liegen, einen zum Betreiben der Antennenschaltungen verwendeten Leistungsanteil, das heißt ein Maß des ausgekoppelten Signalanteils, auf ein Minimum zu beschränken.

Alternative Ausführungsbeispiele zeigen aktive Antennenvorrichtungen, bei denen anstelle der optionalen Batterie 38 ein anderer Energiespeicher angeordnet ist. Dabei kann es sich um einen Kondensator oder ein Spulenelement handeln.

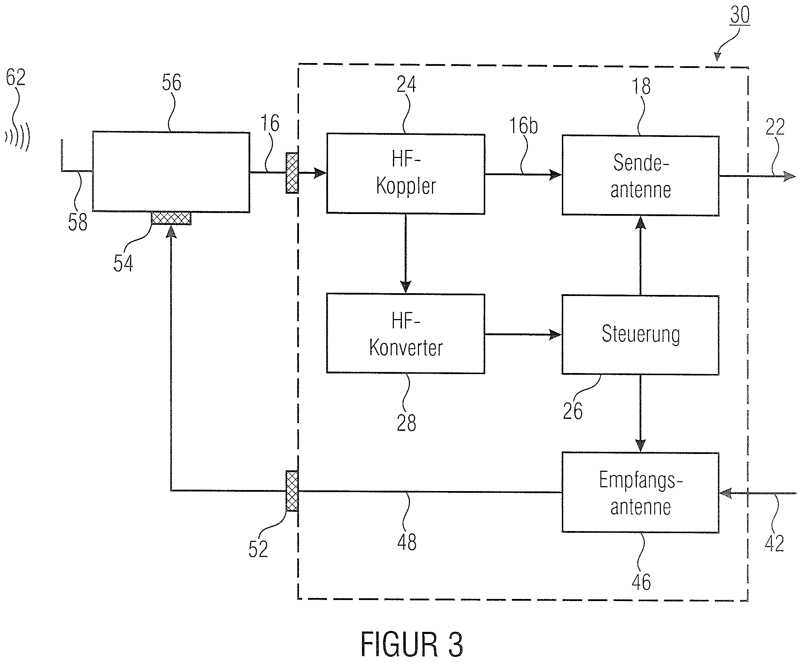

Fig. 3 zeigt ein schematisches Blockschaltbild einer aktiven Antennenvorrichtung 30 gemäß einem weiteren Ausführungsbeispiel der vorliegenden Erfindung. Die aktive Antennenvorrichtung 30 weist eine (Sende-)Antenne 18 und eine Empfangsantenne 46 auf. Die Antenne 18 ist ausgebildet, um ein zu sendendes Signal 16 bzw. einen Anteil 16b des zu sendenden Signals 16 in Form eines Funksignals 22 zu senden.

Die Empfangsantenne 46 ist ausgebildet, um das Funksignal 42 zu empfangen und in ein drahtgebundenes Signal 48 zu überführen. Die aktive Antennenvorrichtung 30 ist ausgebildet, um das drahtgebundene Signal 48 an einem weiteren Anschluss 52 auszugeben. Der weitere Anschluss 52 ist mit einem Empfangsanschluss 54 einer Signalquelle 56 gekoppelt. Die Signalquelle 56 ist ausgebildet, um das zu sendende Signal 16 bereitzustellen, und um das drahtgebundene Signal 48 an dem Empfangsanschluss 54 zu empfangen.

Die Steuerung 26 ist ausgebildet, um die Sendeantenne 18 und die Empfangsantenne 46 zu steuern und kann in alternativen Ausführungsbeispielen Teil der Antenne 18 sein.

Vorteilhaft an diesem Ausführungsbeispiel ist, dass Einfügedämpfungen eines HF-Kopplers 24 in einer Empfangsrichtung über die Empfangsantenne 46 hin zu der Signalquelle, das heißt dem RFID-Leser 56, vernachlässigbar sein können.

Bei bistatischen Szenarios, bei denen zum Senden und Empfangen unterschiedliche Antennen verwendet werden, kann das Ziel, einen zum Betreiben der Antennenschaltungen verwendeten Leistungsanteil, auf ein Minimum zu beschränken, vernachlässigbar sein.

Die Signalquelle 56 weist eine Empfangseinrichtung 58 auf, die ausgebildet ist, um ein Drahtlossignal 62 zu empfangen und das zu sendende Signal, bspw. mittels eines Hochfrequenz-Signalgenerators, bereitzustellen. Die Signalquelle 56 kann mit einem RFID-Leser gekoppelt sein und ausgebildet sein, um von diesem mittels des Drahtlossignals 62 Informationen empfangen, die das zu sendende Signal 16 zumindest teilweise beeinflussen. Eine Information des Drahtlossignals 62 kann zumindest teilweise beeinflussen, welche Frequenz, welche Senderichtung (Vorzugsrichtung) oder welche Information das Funksignal 22 aufweist.

Alternativ kann auch eine weitere Vorrichtung mit der aktiven Antennenvorrichtung 30 bzw. dem weiteren Anschluss 52 gekoppelt sein. Das drahtgebundene Signal 48 kann so der weiteren Vorrichtung bereitgestellt werden.

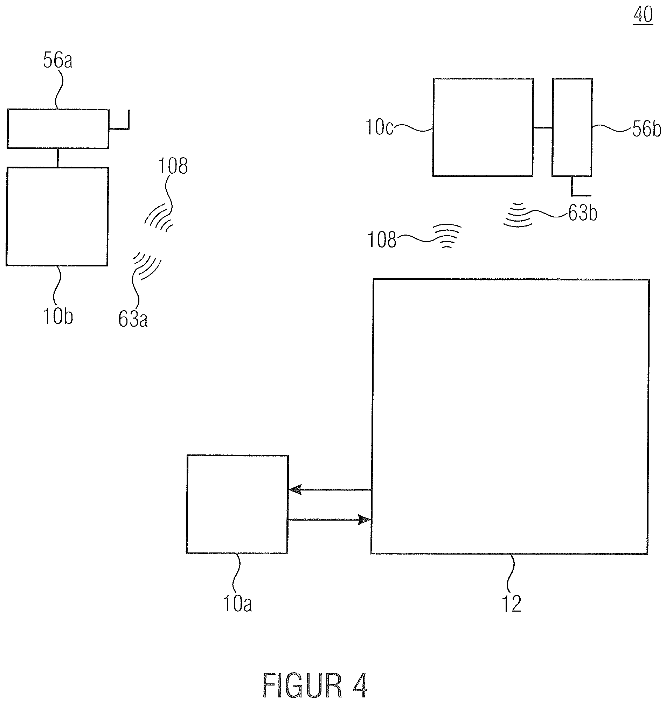

Fig. 4 zeigt ein schematisches Blockschaltbild eines Funkerkennungs-Systems 40 mit einem Funkerkennungs-Lesegerät 12 und drei aktiven Antennenvorrichtungen 10a, 10b und 10c. Die Antennenvorrichtung 10a ist kabelgebunden mit dem Funkerkennungs-Lesegerät 12 verbunden. Das Funkerkennungs-Lesegerät kann in anderen Worten als System-Master fungieren.

Die Signalquellen 56a und 56b sind mit den aktiven Antennenvorrichtungen 10b und 10c gekoppelt und ausgebildet, um das Drahtlossignal 62 von dem Funkerkennungs-Lesegerät 12 zu empfangen und den aktiven Antennenvorrichtungen 10b und 10c zu sendende Signale bereitzustellen. Die Signalquellen 56a und 56b sind ausgebildet, um dem Funkerkennungs-Lesegerät 12 Informationen mittels eines Drahtlossignals 63a bzw. 63b zu übermitteln. Informationen des Drahtlossignals 63a der aktiven Antennenvorrichtung 10b bzw. des Drahtlossignals 63b der aktiven Antennenvorrichtung 10c können beispielsweise Informationen über erkannte Funkerkennungs-Bausteine (RFID-Tags) sein.

Eine Anbindung von aktiven Antennenvorrichtungen bzw. von Lesegeräten mit aktiven Antennenvorrichtungen 10b und 10c ermöglicht eine verteilte Überwachung eines größeren Bereichs durch verschiedene, gegebenenfalls weit verteilte drahtlos angebundene Lesegeräte mit aktiven Antennenvorrichtungen.

Alternative Ausführungsbeispiele weisen ein Funkerkennungs-Lesegerät 12 auf, das mit zumindest einer aktiven Antennenvorrichtung 10, 20 oder 30 gekoppelt ist.

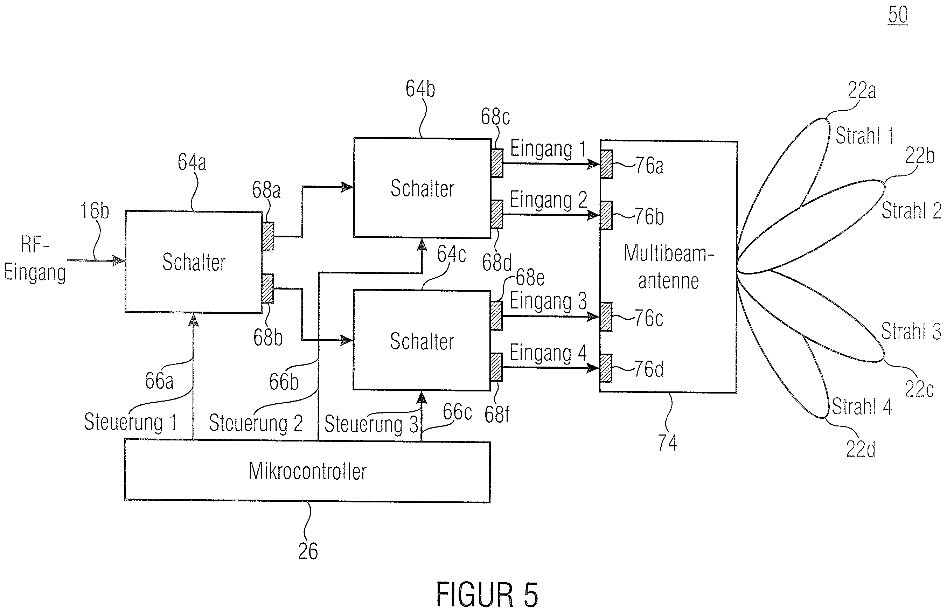

Fig. 5 zeigt eine schematisches Blockschaltbild einer intelligenten Antenne 50, beispielsweise die Antenne 18 in Fig. 2.

Das Hochfrequenz-Eingangssignal (Hochfrequenz = Radio Frequency - RF; Eingang = Input) 16b ist an einem Schalter 64a angelegt. Der Schalter 64a ist ausgebildet, um basierend auf einem Steuerungssignal 66a (Steuerung 1) das Hochfrequenz-Eingangssignal 16b an zumindest einem von mehreren, beispielsweise zwei, Ausgängen 68a und 68b ganz oder anteilig anzulegen. Das bedeutet, dass basierend auf dem Steuersignal 66a das Hochfrequenz-Eingangssignal 16b ganz oder teilweise an dem Ausgang 68a und/oder ganz oder teilweise an dem Ausgang 68b anlegbar ist.

An dem Ausgang 68a ist ein Schalter 64b eingangsseitig mit dem Schalter 64a gekoppelt. An dem Ausgang 68b ist ein Schalter 64c eingangsseitig mit dem Schalter 64a gekoppelt.

Die Schalter 64b und 64c weisen Ausgänge 68c und 68d bzw. 68e und 68f auf und können eine gleiche Konfiguration wie der Schalter 64a aufweisen. Der Schalter 64b ist ausgebildet, um mittels eines Steuersignals 66b (Steuerung 2) gesteuert zu werden und ein an dem Schalter 28b angelegtes Eingangssignal ausgangsseitig ganz oder teilweise an zumindest einem seiner Ausgänge bereitzustellen. Der Schalter 64c ist ausgebildet, um mittels eines Steuersignals 66c (Steuerung 3) gesteuert zu werden. Die Steuerung 26 ist als Mikrocontroller ausgeführt und ist ausgebildet, um die Steuersignale 66a-c bereitzustellen.

In anderen Worten wird das Hochfrequenz-Eingangssignal 16b mittels der Steuersignale 66a-c auf vier Ausgänge 68c-f geleitet oder verteilt. Eine Antenne 74 ist ausgebildet, um das Funksignal 22a-d in mehreren, voneinander verschiedenen Vorzugsrichtungen auszusenden. Eine Vorzugsrichtung kann als Strahl, Strahlenkeule oder mit dem englischen Begriff "beam" bezeichnet werden. Die Antenne 74 ist bspw. ausgebildet, um ein jeweiliges Funksignal 22a-d in zumindest einem von vier voneinander verschiedene Strahlenkeulen (Strahl 1-4) auszusenden. In welchem oder welchen der Strahlen 1-4 das Funksignal 22a-d basierend auf dem HF-Eingangssignal 16b von der Antenne 74 ausgesendet wird, kann zumindest teilweise davon beeinflusst werden, an welchem Eingang 76a-d der Antenne 74 das HF-Eingangssignal 16b an der Antenne 74 angelegt ist. Bspw. kann je ein Eingang 76a-d mit einer Mehrzahl von Antennenelementen der Antenne 74 verbunden sein, so dass eine Abstrahlung des Funksignals 22a-d an dem Antennenelementen zur Ausbildung einer Vorzugsrichtung führt, etwa mittels Superposition.

Die Antenne 74 und/oder die Schalter 64a-c können Phasenschieber aufweisen, die ausgebildet sind, um eine Phase eines jeweilig an einem Eingang angelegten Signals zu verändern, um bspw. mittels einer Überlagerung verschiedener Phasen(-lagen) des zu sendenden Signals an verschiedenen Antennenelementen eine Vorzugsrichtung oder Abstrahlcharakteristik zu realisieren. Alternativ oder zusätzlich kann die Antenne 74 die Phasenschieber derart mit selbiger gekoppelt aufweisen, dass eine Vorzugsrichtung mittels Anlegen des zu sendenden Signals 16b an einem der Eingänge 76a-d wählbar ist.

Die Antenne 74 ist ausgebildet, um mittels der Strahlen 1-4 verschiedene Vorzugsrichtungen aufzuweisen und kann als Multibeam-Antenne bezeichnet werden. Die Multibeam-Antenne 74 weist beispielsweise ein Antennenarray, das bedeutet ein Antennenfeld mit 2x2, das heiß 4, Antennenelementen auf. Ein sogenanntes Butler-Matrixnetzwerk mit N Antennenelementen kann genutzt werden, um eine Anzahl von N verschiedenen Strahlen zu erzeugen, je nachdem, auf welchen von N Eingängen der Multibeam-Antenne 74 das Eingangssignal angelegt, das heißt auf welchen Eingang zugegriffen wird. Weist die intelligente Antenne 50 bzw. die Multibeam-Antenne 74 vier Eingangskanäle (Eingangstore) 76a-d und vier Antennenelemente auf, kann einer von vier orthogonalen verfügbaren Strahlen (Strahlen 1-4) wähl- oder ansteuerbar sein, basierend darauf, auf welches Tor 76a-d bzw. welchen Kanal zugegriffen wird. Die Abstrahlrichtung kann dynamisch während eines Betriebs der Antenne 74 mittels einer dynamischen Ansteuerung durch den Mikrocontroller 26 veränderbar sein.

Eine Strahlauswahl kann mittels der Schalter 64a-c und mittels des Mikrocontrollers 26 automatisiert werden. Der Mikrocontroller 26 und die Schalter 64a-c bilden eine sogenannte Schalter-Schaltung. Anstelle einer externen Leistungsversorgung, beispielsweise mittels USB-Kabel, kann eine energieautarke Versorgung der intelligenten Antenne 50 mittels einer aus dem zu sendenden Signal ausgekoppelten Leistung erfolgen. Ein vorherrschender Nachteil im Stand der Technik, dass eine Leistungsversorgung mittels Kabel oder Batterie erfolgt, kann mittels einer energieautarken Versorgung überwunden werden. So kann ein Kreis von potentiellen Nutzern, die bislang standardmäßig passive Antennen nutzen, erweiterbar sein.

Auch können durch eine Kompensation von verursachten Leistungsreduktionen (etwa durch die Einfügedämpfung oder die Auskopplung von Signalanteilen) Technologie-Hindernisse überwunden werden, die ein gedämpftes Funksignal vermuten lässt, bspw. eine verringerte Reichweite des Funksignals oder einer verringerten Erkennungsrate des RFID-Lesegeräts.

Die intelligente Antenne 50 kann ausgebildet sein, um Eingangssignale mittels der Multibeam-Antenne 74 empfangen. Alternativ oder zusätzlich kann die intelligente Antenne 50 eine weitere Empfangsantenne aufweisen. In diesem Fall kann die Multibeam-Antenne 74 ausgebildet sein, um ein zu sendendes Signal 16b in Form eines Funksignals zu senden. Die weitere Antenne kann ausgebildet sein, um Funksignale zu empfangen und der Signalquelle, die das zu sendende Signal bereitstellt, oder einer anderen Vorrichtung bereitzustellen. Die Steuerung 26 kann ausgebildet sein, um die Antenne 74 so anzusteuern, dass das Funksignal 22a-d ein oder mehrere Strahlungskeulen aufweist. Die Steuerung 26 kann ausgebildet sein, um einen Abstrahlwinkel einer Strahlungskeule einzustellen oder auszuwählen. Die Strahlungskeulen können orthogonal zueinander im Raum angeordnet sein. In anderen Worten kann mit einer Strahlungskeule die Richtung des Funk-Sendesignals 22a-d eingestellt oder beschränkt werden.

In anderen Worten kann eine Verwendung einer externen Leistungsversorgung oder von Batterien, die ersetzt werden müssen, vermieden werden. Aus einem seitens des RFID-Lesegeräts bereitgestellten und zu sendenden HF-Signal mit einer hohen Leistung kann ein Signalanteil ausgekoppelt werden. Mit diesem Signalanteil kann eine Elektronik der Antenne mit ausreichend Leistung versorgt werden. Auf diese Art und Weise kann die Antenne selbstversorgend, das heißt (energie-)autark, ausgebildet sein, da sie keine zusätzliche Leistungsversorgung und keinen zusätzlichen Batteriewechsel benötigt und für potentielle Nutzer und Kunden nicht an Attraktivität einbüßt.

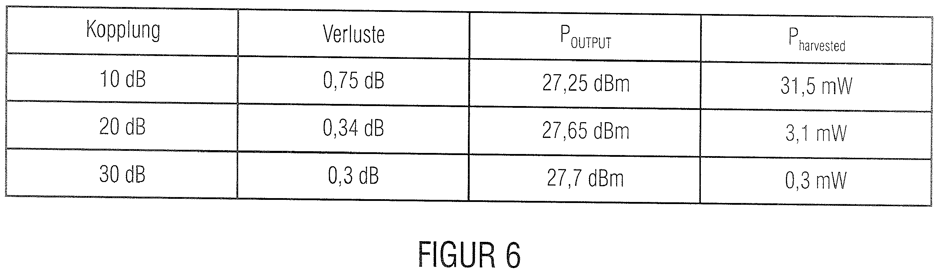

Fig. 6 zeigt eine Tabelle, in der beispielhaft Koppelfaktoren und Verluste eines HF-Kopplers, verbleibende Leistungen eines zu sendenden Signals (P_{OUTPUT}) und Leistungen eines jeweiligen Leistungssignals (P_{harvested}), das von HF-Konvertern bereitgestellt werden kann, gegenübergestellt sind. Für das zu sendende Signal wird eine Leistung von 28 dBm, d.h. in etwa 630 mW angenommen. Für den Koppler wird eine Einfügedämpfung (engl. insertion loss) von 0,3 dB angenommen, die bspw. teilweise durch ohm'sche Verluste bei elektrischen Kontakten verursacht sein können. Für den Konverter wird eine Energieeffizienz von 50 % angenommen. P_{OUTPUT} bezeichnet die Ausgangsleistung des zu sendenden Signals, nachdem ein Anteil zur Leistungsversorgung ausgekoppelt ist (output = Ausgang). P_{harvested} (harvested = geerntet) bezeichnet eine Leistung, die mittels des Konverters aus dem ausgekoppelten Signalanteil bereitstellbar (zu ernten) ist. Die Verluste bezeichnen das Ausmaß, um welches sich die Leistung des zu sendenden Signals reduziert und setzen sich vorliegender Tabelle aus dem konstanten Anteil Einfügedämpfung (0,3 dB) und dem variablen Anteil Koppeldämpfung (engl. coupling losses) zusammen.

Die Werte verstehen sich lediglich als Beispielwerte, um zu verdeutlichen, dass ein Kompromiss zwischen dem Kopplungsfaktor und den Verlusten für das RFID-Signal vorliegt. Je höher der Kopplungsfaktor bzw. eine daraus resultierende Koppeldämpfung (und der für die Leistungsversorgung nutzbaren Leistung), desto höher die Verluste. Für den dargestellten Bereich ist ersichtlich, dass Leistungen zwischen 0,3 mW und 31 mW, (Zeilen 3 bzw. 1), mit Verlusten zwischen 0,3 dB (Zeile 3) bzw. 0,75 dB (=0,3 dB Einfügedämpfung + 0,45 dB Koppeldämpfung; Zeile 1) erzielbar sind, d.h., geerntet werden können. Ein Coupling-Wert von 30 dB bedeutet, dass ein Anteil von 0,1% der Leistung des zu sendenden Signals ausgekoppelt wird und dieser zu einer entsprechenden Koppeldämpfung von 0,0044 dB führt. Bei höheren Anteilen, beispielsweise 1 % bei einem Coupling-Wert von 20 dB, steigt auch die Koppeldämpfung auf 0,044 dB.

In anderen Worten zeigt Fig. 6 eine Leistungsschätzung für eine Lesegerät-Ausgangsleistung von 28 dBm, Kopplungselement-Einfügungsverluste von 0,3 dB sowie eine RF/GS-Umwandlungseffizienz von 50%.

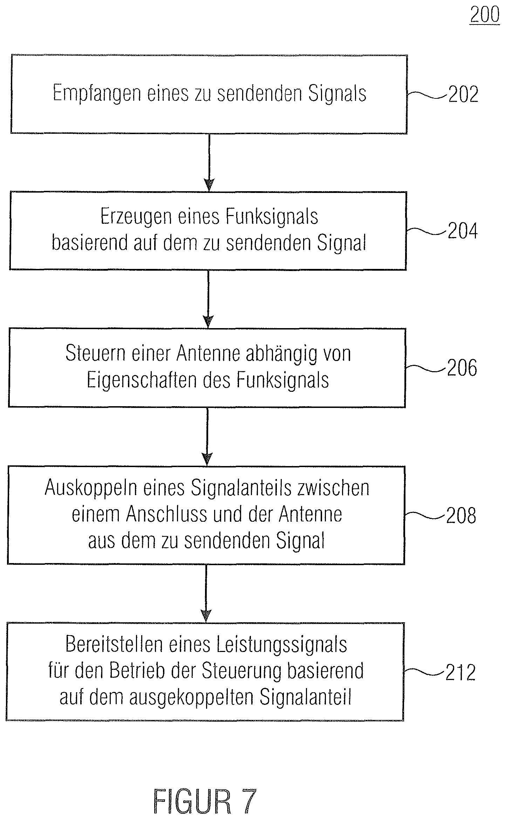

Fig. 7 zeigt ein schematisches Flussdiagramm eines Verfahrens 200 zum Betrieb einer aktiven Antennenvorrichtung. Ein erster Schritt 202 umfasst ein Empfangen eines zu sendenden Signals. Ein zweiter Schritt 204 umfasst ein Erzeugen eines Funksignals basierend auf dem zu sendenden Signal, etwa durch Anlegen des verbleibenden Signalanteils 16b an eine Antennenstruktur. Ein dritter Schritt 206 umfasst ein Steuern einer Antenne abhängig von (angestrebten oder gewünschten) Eigenschaften des Funksignals. Ein vierter Schritt 208 umfasst ein Auskoppeln eines Signalanteils zwischen einem Anschluss und der Antenne aus dem zu sendenden Signal. Ein fünfter Schritt 212 umfasst ein Bereitstellen eines Leistungssignals für den Betrieb einer Steuerung basierend auf dem ausgekoppelten Signalanteil.

Das Verfahren 200 ermöglicht eine Versorgung aktiver RFID-Antennen mit Leistung, ohne dabei eine externe Leistungsversorgung zu verwenden. Ferner kann auch auf einen Einsatz von Batterien, die gewechselt werden müssen, verzichtet werden. Beispielsweise können Kondensatoren oder Akkumulatoren als Puffer wartungsfrei, das bedeutet ohne einen erforderlichen Wechsel bzw. einen Ersatz oder mit langen Wartungsintervallen zwischen einem Wechsel, genutzt werden. Das Verfahren ermöglicht eine Versorgung der aktiven Antenne, indem das bereits existierende RFID-Signal verwendet wird. Das Verfahren ist für RFID-Lesegeräte nahezu transparent, lediglich eine Ausgangsleistung des Lesegeräts kann gegebenenfalls anzupassen sein, um eingefügte Einfügungsverluste der aktiven Antennenvorrichtung zu kompensieren. Eine Ausdehnung des Konzeptes auf andere Technologiebereiche, wie etwa Mobilfunk oder Drahtlosnetzwerke ist ebenfalls möglich. Prinzipiell kann das Konzept auf alle Technologiebereiche anwendbar sein, bei denen eine aktive Antennenvorrichtung zum Senden von Funksignalen eingesetzt werden können.. Bei RFID-Systemen ist das Verfahren 200 interessant, da bei diesen Systemen der RFID-Träger stets aktiviert sein kann, um zu erfassende RFID-Tags mit Leistung zu versorgen. Das bedeutet, dass das zu sendende Signal stets an einer aktiven Antenne anliegen kann. Außerdem eignet sich das Verfahren 200 sehr gut für eine Kombination mit vorhandenen serienmäßigen Lesegeräten, wodurch die Investitionen in vorhandene Infrastruktur eingespart werden können.

In anderen Worten zeigen Ausführungsbeispiele Systeme und Verfahren zum Versorgen von selbstversorgenden/autarken RFID-Antennen mit Leistung, ohne eine zusätzliche externe Leistungsversorgung.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Aktive Antennenvorrichtung zum Senden von RFID-Signalen mit folgenden Merkmalen, **gekennzeichnet durch**:
einem Anschluss (14) zum Empfangen eines zu sendenden RFID-Signals (16);
einer Antenne (18; 50) zum Erzeugen eines Funksignals (22) basierend auf dem zu sendenden RFID-Signal (16);
einer Steuerung (26), die konfiguriert ist, um Eigenschaften der Antenne (18; 50) zu steuern;
einem Koppler (24) zwischen dem Anschluss (14) und der Antenne (18; 50), der ausgebildet ist, um einen Signalanteil (16a) aus dem zu sendenden RFID-Signal (16) auszukoppeln; und
einem Energiekonverter (28), der zwischen den Koppler (24) und die Steuerung (26) geschaltet ist und ausgebildet ist, um ein Leistungssignal (32) für den Betrieb der Steuerung (26) basierend auf dem ausgekoppelten Signalanteil (16a) bereitzustellen;
wobei die aktive Antennenvorrichtung eine energieautarke Vorrichtung ist.

2. Aktive Antennenvorrichtung gemäß Anspruch 1, bei der die Steuerung (26) ausgebildet ist, um die Antenne (18; 50) so anzusteuern, dass das Funksignal (22) ein oder mehrere Strahlungskeulen (22a-d) aufweist und/oder ausgebildet ist, um einen Abstrahlwinkel einer oder mehrerer Strahlungskeulen (22a-d) des Funksignals (22) einzustellen.

3. Aktive Antennenvorrichtung gemäß Anspruch 1 oder 2, bei der die Antenne (18; 50) eine Mehrzahl von Antennenelementen und zumindest einen Schalter (64a-c), der mit einem Antennenelement verbunden ist, aufweist und bei der die Steuerung (26) ausgebildet ist, um den zumindest einen Schalter (64a-c) anzusteuern, so dass basierend auf den Eigenschaften des Funksignals (22) oder der Antenne (18; 50) das zu sendende RFID-Signal (16) an zumindest eines der Antennenelemente anlegbar ist.

4. Aktive Antennenvorrichtung gemäß einem der vorangegangenen Ansprüche, bei der der Anschluss (14) mit einem Antennenanschluss einer Signalquelle (12; 56), die das zu sendende RFID-Signal bereitstellt, verbindbar ist.

5. Aktive Antennenvorrichtung gemäß Anspruch 4, mit einem Befestigungselement (34), das mit dem Anschluss (14) verbunden ist, und das mit dem Antennenanschluss der Signalquelle (12; 56), die das zu sendende RFID-Signal (16;) bereitstellt, verbindbar ist.

6. Aktive Antennenvorrichtung gemäß einem der vorangegangenen Ansprüche, mit einem Verbindungselement, das mit der Signalquelle (12; 56), die das zu sendende RFID-Signal (16) bereitstellt, verbindbar ist,

7. Aktive Antennenvorrichtung gemäß einem der vorangegangenen Ansprüche, bei der die Antenne (18; 50) eine Sende-Empfangs-Antenne ist, die ausgebildet ist, um das Funksignal (22) auszusenden, und um ein Empfangssignal (42) zu empfangen und an dem Anschluss (14) bereitzustellen.

8. Aktive Antennenvorrichtung gemäß einem der vorangegangenen Ansprüche, mit einer Empfangsantenne (46), um ein Empfangssignal (42) zu empfangen und an einem Empfangsanschluss (52) bereitzustellen.

9. Aktive Antennenvorrichtung gemäß Anspruch 8, bei dem die Steuerung (26) ausgebildet ist, um die Empfangsantenne (46) anzusteuern.

10. Aktive Antennenvorrichtung gemäß einem der vorangehenden Ansprüche, die mit einer Signalquelle (12; 56), die einen Hochfrequenz-Signalgenerator aufweist und die ausgebildet ist, um das zu sendende RFID-Signal (16) basierend auf einem mittels einer Drahtloskommunikationsschnittstelle (58) empfangenen Signals (62) bereitzustellen, gekoppelt ist.

11. Aktive Antennenvorrichtung gemäß einem der vorangehenden Ansprüche, mit einem Energiespeicher (38) zwischen dem Energiekonverter (28) und der Steuerung (26), der ausgebildet ist, um die elektrische Energie von dem Energiekonverter (28) zumindest teilweise zu empfangen und der Steuerung (26) bereitzustellen.

12. Aktive Antennenvorrichtung gemäß einem der vorangehenden Ansprüche, bei der der Energiekonverter (28) ein Hochfrequenz-Gleichspannungswandler ist.

13. Aktive Antennenvorrichtung gemäß einem der vorangehenden Ansprüche, bei der der Koppler (24) ausgebildet ist, um zumindest 0,1 % der Leistung des zu sendenden RFID-Signals (16) auszukoppeln.

14. Funkerkennungs-System mit folgenden Merkmalen:
einem Funkerkennungs-Lesegerät (12); und
zumindest einer aktiven Antennenvorrichtung (10; 10a; 10b; 20, 30) gemäß einem der Ansprüche 1-13.

15. Verfahren zum energieautarken Betrieb einer aktiven Antennenvorrichtung zum Senden von RFID-Signalen, **gekennzeichnet durch** folgende Schritte:
Empfangen (202) eines zu sendenden RFID-Signals;
Erzeugen (204) eines Funksignals basierend auf dem zu sendenden RFID-Signal;
Steuern (206) von Antenneneigenschaften;
Auskoppeln (208) eines Signalanteils zwischen einem Anschluss und der Antenne aus dem zu sendenden RFID-Signal; und
Bereitstellen (212) eines Leistungssignals für den energieautarken Betrieb einer Steuerung basierend auf dem ausgekoppelten Signalanteil.

## Claims

1. Active antenna device for transmitting RFID signals, comprising, **characterized by**:
a terminal (14) for receiving a RFID signal to be transmitted (16);
an antenna (18; 50) for generating a radio signal (22) based on the RFID signal to be transmitted (16);
a controller (26) that is configured to control properties of the antenna (18; 50);
a coupler (24) between the terminal (14) and the antenna (18; 50) that is configured to decouple a signal portion (16a) from the RFID signal to be transmitted (16); and
an energy converter (28) that is connected between the coupler (24) and the controller (26) and configured to provide a power signal (32) for the operation of the controller (26) based on the decoupled signal portion (16a);
wherein the active antenna device is an energy self-sufficient device.

2. Active antenna device according to claim 1, wherein the controller (26) is configured to control the antenna (18; 50) such that the radio signal (22) comprises one or more radiation lobes (22a-d) and/or is configured to adjust a radiation angle of one or more radiation lobes (22a-d) of the radio signal (22).

3. Active antenna device according to claim 1 or 2, wherein the antenna (18; 50) comprises a plurality of antenna elements and at least one switch (64a-c) that is connected to an antenna element, and wherein the controller (26) is configured to control the at least one switch (64a-c) such that, based on the properties of the radio signal (22) or the antenna (18; 50), the RFID signal to be transmitted (16) can be applied to at least one of the antenna elements.

4. Active antenna device according to one of the preceding claims, wherein the terminal (14) is connectable to an antenna terminal of a signal source (12; 56) providing the RFID signal to be transmitted.

5. Active antenna device according to claim 4, with a mounting element (34) that is connected to the terminal (14) and that is connectable to the antenna terminal of the signal source (12; 56) providing the RFID signal to be transmitted (16).

6. Active antenna device according to one of the preceding claims, with a connection element that is connectable to the signal source (12; 56) providing the RFID signal to be transmitted (16).

7. Active antenna device according to one of the preceding claims, wherein the antenna (18; 50) is a transmit-receive antenna that is configured to radiate the radio signal (22), and to receive a receive signal (42) and to provide the same at the terminal (14).

8. Active antenna device according to one of the preceding claims, with a receive antenna (46) in order to receive a receive signal (42) and to provide the same at a receive terminal (52).

9. Active antenna device according to claim 8, wherein the controller (26) is configured to control the receive antenna (46).

10. Active antenna device according to one of the preceding claims that is coupled to a signal source (12; 56) comprising a radio-frequency signal generator and being configured to provide the RFID signal to be transmitted (16) based on a signal (62) received by means of a wireless communication interface (58).

11. Active antenna device according to one of the preceding claims, with an energy storage device (38) between the energy converter (28) and the controller (26) that is configured to at least partially receive the electric energy from the energy converter (28) and to provide the controller (26) with the same.

12. Active antenna device according to one of the preceding claims, wherein the energy converter (28) is a radio-frequency direct current converter.

13. Active antenna device according to one of the preceding claims, wherein the coupler (24) is configured to decouple at least 0.1 % of the power of the RFID signal to be transmitted (16).

14. Radio-frequency identification system, comprising:
a radio-frequency identification reader (12); and
at least one active antenna device (10; 10a; 10b; 20, 30) according to any of claims 1 to 13.

15. Method for operating an active antenna device in an energy self-sufficient manner for transmitting RFID signals, **characterized by** the following steps:
receiving (202) a RFID signal to be transmitted;
generating (204) a radio signal based on the RFID signal to be transmitted;
controlling (206) antenna properties;
decoupling (208) a signal portion between a terminal and an antenna from the RFID signal to be transmitted; and
providing (212) a power signal for the energy self-sufficient operation of a controller based on the decoupled signal portion.

## Revendications

1. Dispositif` d'antenne active pour envoyer des signaux RFID aux caractéristiques suivantes, **caractérisé par**:
une connexion (14) destinée à recevoir un signal RFID à envoyer (16);
une antenne (18; 50) destinée à générer un signal radio (22) sur base du signal RFID à envoyer (16);
un moyen de commande (26) configuré pour commander les caractéristiques de l'antenne (18; 50);
un coupleur (24) entre la connexion (14) et l'antenne (18; 50) qui est conçu pour découpler une part de signal (16a) du signal RFID à envoyer (16); et
un convertisseur d'énergie (28) connecté entre le coupleur (24) et le moyen de commande (26) et conçu pour mettre à disposition un signal de puissance (32) pour le fonctionnement du moyen de commande (26) sur base de la part de signal découplée (16a);
dans lequel le dispositif d'antenne active est un dispositif autosuffisant en énergie.

2. Dispositif d'antenne active selon la revendication 1, dans lequel le moyen de commande (26) est conçu pour actionner l'antenne (18; 50) de sorte que le signal radio (22) présente un ou plusieurs lobes de rayonnement (22a à d) et/ou est conçu pour régler un angle de rayonnement d'un ou plusieurs lobes de rayonnement (22a à d) du signal radio (22).

3. Dispositif d'antenne active selon la revendication 1 ou 2, dans lequel l'antenne (18; 50) présente une pluralité d'éléments d'antenne et au moins un commutateur (64a à c) qui est connecté à un élément d'antenne et dans lequel le moyen de commande (26) est conçu pour actionneur l'au moins un commutateur (64a à c) de sorte que, sur base des propriétés du signal radio (22) ou de l'antenne (18; 50), le signal RFID à envoyer (16) puisse être appliqué à au moins l'un des éléments d'antenne.

4. Dispositif d'antenne active selon l'une des revendications précédentes, dans lequel la connexion (14) peut être reliée à une connexion d'antenne d'une source de signal (12; 56) qui met à disposition le signal RFID à envoyer.

5. Dispositif d'antenne active selon la revendication 4, avec un élément de fixation (34) qui est relié à la connexion (14) et qui peut être relié à la connexion d'antenne de la source de signal (12; 56) qui met à disposition le signal RFID à envoyer (16).

6. Dispositif d'antenne active selon l'une des revendications précédentes, avec un élément de connexion qui peut être relié à la source de signal (12; 56) qui met à disposition le signal RFID à envoyer (16).

7. Dispositif d'antenne active selon l'une des revendications précédentes, dans lequel l'antenne (18; 50) est une antenne d'émission-réception qui est conçue pour envoyer le signal radio (22) et pour recevoir un signal de réception (42) et le mettre à disposition à la connexion (14).

8. Dispositif d'antenne active selon l'une des revendications précédentes, avec une antenne de réception (46) pour recevoir un signal de réception (42) et le mettre à disposition à une connexion de réception (52).

9. Dispositif d'antenne active selon la revendication 8, dans lequel le moyen de commande (26) est conçu pour actionneur l'antenne de réception (46).

10. Dispositif d'antenne active selon l'une des revendications précédentes, qui est couplée à une source de signal (12; 56) qui présente un générateur de signal de haute fréquence et qui est conçu pour mettre à disposition le signal RFID à envoyer (16) sur base d'un signal (62) reçu au moyen d'une interface de communication sans fil (58).

11. Dispositif d'antenne active selon l'une des revendications précédentes, avec un accumulateur d'énergie (38), entre le convertisseur d'énergie (28) et le moyen de commande (26), qui est conçu pour recevoir au moins partiellement l'énergie électrique du convertisseur d'énergie (28) et la mettre à disposition du moyen de commande (26).

12. Dispositif d'antenne active selon l'une des revendications précédentes, dans lequel le convertisseur d'énergie (28) est un convertisseur continu-continu à haute fréquence.

13. Dispositif d'antenne active selon l'une des revendications précédentes, dans lequel le coupleur (24) est conçu pour découpler au moins 0,1% de la puissance du signal RFID à envoyer (16).

14. Système d'identification par radiofréquence aux caractéristiques suivantes:
un lecteur à identification par radiofréquence (12); et
au moins un dispositif d'antenne active (10; 10a; 10b; 20, 30) selon l'une des revendications 1 à 13.

15. Procédé pour faire fonctionner de manière autosuffisante en énergie un dispositif d'antenne active destiné à envoyer des signaux RFID, **caractérisé par** les étapes suivantes consistant à:
recevoir (202) un signal RFID à envoyer;
générer (204) une signal radio sur base du signal RFID à envoyer;
commander (206) les propriétés d'antenne;
découpler (208) une part de signal entre une connexion et l'antenne du signal RFID à envoyer; et
mettre à disposition (212) un signal de puissance pour le fonctionnement autosuffisant d'un moyen de commande sur base de la part de signal découplée.
